Europäisches Patentamt

European Patent Office

Office européen des brevets

(11) Publication number: **0 318 232**
**A1**

## (12) EUROPEAN PATENT APPLICATION

(21) Application number: 88311013.2

(22) Date of filing: 22.11.88

(51) Int. Cl.⁴: **F16L 59/14 , F16L 55/02 ,**
**F01N 7/14**

(30) Priority: 26.11.87 GB 8727694

(43) Date of publication of application:
31.05.89 Bulletin 89/22

(84) Designated Contracting States:
DE FR GB IT SE

(71) Applicant: **JAGUAR CARS LIMITED**
**Browns Lane**
**Allesley Coventry CV5 9DR West**
**Midlands(GB)**

(72) Inventor: **Bishop, Edward Timothy**
**Hillside Cottage Hellindon**
**Nr. Staverton Northants NN11 6LG(GB)**

(74) Representative: **Cundy, Anthony Brian et al**
**Anthony Cundy & Company 384 Station**
**Road Dorridge**
**Solihull West Midlands B93 8ES(GB)**

(54) Insulated pipe.

(57) An insulated pipe which may be used, for example, in an exhaust system for a motor vehicle comprises a primary pipe (1), a secondary tube (2) mounted within the pipe and spaced therefrom and insulation material (4) provided in the space between the secondary tube and the primary pipe. The secondary tube (2) is open at each end and extends along at least a part of the axial length of the pipe, the tube being provided with a plurality of perforations (3) so as to permit communication between the spaces on either side of the secondary tube.

FIG 2

# INSULATED PIPE

The present invention relates to an insulated pipe which may be used, for example, in an exhaust system such as may be used in a motor vehicle. More particularly, but not exclusively, the invention relates to an insulated pipe which can be used in addition to or to replace a conventional exhaust silencing system.

In exhaust systems where heat is to be conserved, for example for improved catalyst light-off, or in order to protect equipment mounted close to the system, it is known to provide insulation externally of the exhaust pipe or to provide a secondary skin spaced externally or internally of the exhaust pipe. However, such exhaust systems have a significant thermal capacity and thermal inertia and do not contribute significantly to silencing of the engine exhaust.

It is an object of the present invention to provide an insulated pipe which has a relatively low thermal capacity and thermal inertia and which in use can contribute to the silencing of the engine exhaust.

According to the present invention there is provided an insulated pipe which comprises a primary pipe, a secondary tube mounted within the pipe and spaced therefrom and insulation material provided in the space between the secondary tube and the pipe, wherein the secondary tube is open at each end and extends along at least a part of the axial length of the pipe, the tube being provided with a plurality of perforations so as to permit communication between the spaces on either side of the secondary tube.

Preferably the annular cross-sectional area of the insulation material in the axial direction of the pipe along at least a part of the length of the pipe is small relative to the cross-section area of the pipe.

The insulation material may be a fibrous material, preferably of a type resistant to extrusion through the perforations.

Preferably the perforations in the secondary tube are of such a number and size to reduce the thermal capacity of the secondary tube to at least about half of the thermal capacity of an equivalent unperforated tube.

The secondary tube may be made of at least two laminations, preferably with the perforations in each of the laminations being of different sizes.

The secondary tube may be formed with at least one bellows member. The or at least one bellows member may be positioned at a bend in the primary pipe.

The primary pipe may be made of two half pressings.

The primary pipe may be formed with at least one region of enlarged cross-sectional area.

For a better understanding of the present invention and to show more clearly how it may be carried into effect reference will now be made, by way of example, to the accompanying drawings in which:

Figure 1 is a diagrammatic cross-sectional view through one embodiment of an insulated pipe according to the present invention;

Figure 2 is a cross-sectional view through a second embodiment of an insulated pipe according to the present invention; and

Figure 3 is a view of part of an underside of a vehicle which incorporates a third embodiment of an insulated pipe according to the present invention.

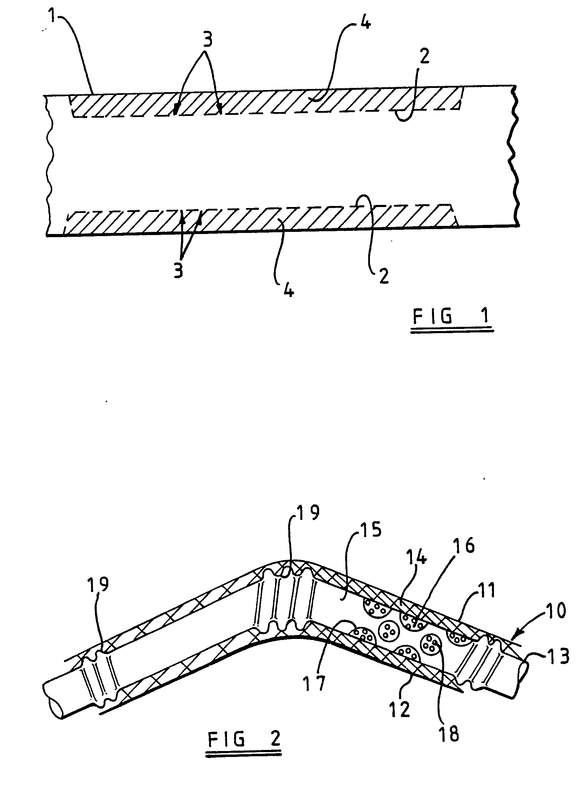

Figure 1 shows a part of an insulated pipe for use, for example, in a vehicle exhaust system and which comprises a primary pipe 1 having a secondary tube 2 mounted within the pipe 1. The tube 2 is spaced from the pipe 1 except in the region of the ends of the tube 2 where the tube is supported by the pipe 1, but does not significantly inhibit the passage of exhaust gases through the pipe.

The tube 2 is provided with a number of perforations 3 which enable the space between the tube 2 and the pipe 1 to communicate with the space within the tube 2.

The size and number of the perforations is sufficient to reduce the thermal capacity and thermal inertia of the tube to at least about half that of an equivalent unperforated tube.

Packed into the space between the tube 2 and the pipe 1 is an insulation material 4 such as a fibrous insulation material of a type resistant to extrusion through the perforations 3. The insulation material 4 assists in silencing the engine exhaust as well as functioning as insulation.

The cross-sectional area of the insulation material in the axial direction of the pipe is small relative to the cross-sectional area of the pipe.

Figure 2 shows an alternative construction of a part of an insulated pipe, for example for use in a vehicle exhaust system. The insulated pipe shown in Figure 2 comprises a primary pipe 10 which is constructed from two half-pressings 11,12. However, it is also possible to make the pipe 10 as a full tube and to feed the secondary tube 13 together with insulation material 14 from one end of the pipe 10. The primary pipe 10 is effectively the structural member of the insulated pipe and provides support for the secondary tube 13 and the insulation material 14.

The secondary tube 13 is made from a laminate of two or more sheets depending upon the anticipated conditions of use of the insulated pipe. As shown in Figure 2, the secondary tube 13 comprises a first lamination 15 and a second lamination 16, the two laminations having perforations 17,18 respectively of different sizes. We have found that the provision of perforations 17,18 of different sizes in the laminations maximises gas flow across the secondary tube 13 while avoiding any difficulties in alignment which would arise if perforations of substantially similar sizes were to be used. To reduce thermal inertia and to provide a modicum of silencing each lamination is perforated to the maximum amount possible while retaining adequate strength.

Spaced along the length of the secondary tube 13 and formed integrally therewith are a number of bellows sections 19. Where there is a bend in the insulated pipe, for example as shown in Figure 2, the bellows sections are preferably positioned to coincide with the bend points of the insulated pipe. This assists in maintaining the spacing between the secondary tube 13 and the primary pipe 10. In addition to maintaining the spacing between the secondary tube 13 and the primary pipe 10 along the length of the insulated pipe, the bellows sections 19 serve to hold the insulation material 14 in place. The secondary tube 13 does not significantly inhibit the passage of exhaust gases through the pipe.

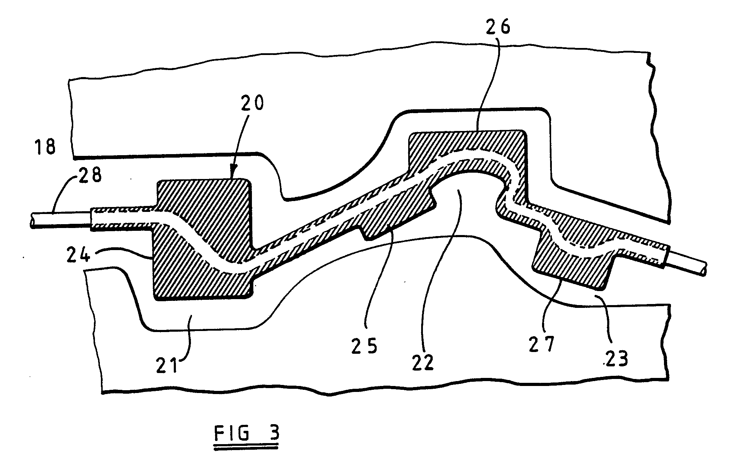

Figure 3 represents a development of the embodiment shown in Figure 2. The insulated pipe shown in Figure 3 effectively forms the silencing system of a motor vehicle and comprises a primary pipe 20 which is made of two half pressings (not shown in detail). Although the pipe 20 is shown in one part it is possible to divide the pipe into two or more parts. The primary pipe 20 is shaped to take advantage of various underfloor recesses 21,22,23 of a vehicle by expanding the cross-sectional area of the pipe in these areas to allow for additional silencing, the provision of catalyst or structural strength. As shown in Figure 3, enlarged sections 24,25,26,27 are formed in the pipe 20. The space within the pipe is filled with insulation material as are the enlarged sections 24,25,26,27, although one or more of the enlarged sections may alternatively be filled with catalyst. The different sizes of the enlarged sections attenuate different frequencies of exhaust noise without significantly restricting gas flow.

Other features of the embodiment shown in Figure 3, such as the construction of secondary tube 28 are essentially as described with reference to Figure 2.

We have found that the insulated pipe according to the present invention not only provides the required insulation but also improves the silencing of the engine exhaust.

A relatively short length of insulated pipe when combined with conventional silencing means provides additional silencing is of considerable importance particularly in so-called luxury cars where inadequate underfloor space often exists for a truly efficient and/or quiet conventional system. However, by making substantially the entire exhaust system out of the insulated pipe we have found that external radiated noise is much reduced when compared with conventional exhaust systems.

## Claims

1. An insulated pipe which comprises a primary pipe (1), a secondary tube (2) mounted within the pipe and spaced therefrom and insulation material (4) provided in the space between the secondary tube and the pipe characterised in that the secondary tube (2) is open at each end and extends along at least a part of the axial length of the pipe, the tube being provided with a plurality of perforations (3) so as to permit communication between the spaces on either side of the secondary tube.

2. A pipe as claimed in claim 1, characterised in that the annular cross-sectional area of the insulation material in the axial direction of the pipe along at least a part of the length of the pipe is small relative to the cross-sectional area of the pipe.

3. A pipe as claimed in claim 1 or 2, characterised in that the insulation material is a fibrous material.

4. A pipe as claimed in claim 3, characterised in that the insulation material is of a type resistant to extrusion through the perforations.

5. A pipe as claimed in any preceding claim, characterised in that the perforations in the secondary tube are of such a number and size to reduce the thermal capacity of the secondary tube to at least about half of the thermal capacity of an equivalent unperforated tube.

6. A pipe as claimed in any preceding claim, characterised in that the secondary tube is made of at least two laminations (15,16).

7. A pipe as claimed in claim 6, characterised in that the perforations (17,18) in each of the laminations (15,16) are of different sizes.

8. A pipe as claimed in any preceding claim, characterised in that the secondary tube is formed with at least one bellows member (19).

9. A pipe as claimed in claim 8, characterised in that the or at least one bellows member is positioned at a bend in the primary pipe.

10. A pipe as claimed in any preceding claim, characterised in that the primary pipe is made of two half-pressings.

11. A pipe as claimed in any preceding claim, characterised in that the primary pipe is formed with at least one region of enlarged cross-sectional area.

Neu eingereicht / Newly filed
Nouvellement déposé

FIG 1

FIG 2

Neu eingereicht / Newly filed
Nouvellement déposé

FIG 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A- 853 854 (ATELIERS VENTIL) <br> * Page 2, lines 32-49; figures * <br> --- | 1,2,3,4,11 | F 16 L 59/14 <br> F 16 L 55/02 <br> F 01 N 7/14 |
| X | DE-A-2 341 055 (SYKES) <br> * Page 3, line 22 - page 4, line 3; figure 2 * <br> --- | 1,2,3,4,8,11 | |
| X | US-A-2 089 492 (LAMBERT) <br> * Figure 19 * <br> --- | 1,2,3,4,6,7 | |
| X | DE-A-2 259 631 (REMBERG) <br> * Figure 4 * <br> ----- | 1,3,4,8,9 | |
| | | | TECHNICAL FIELDS SEARCHED (Int. Cl.4) <br><br> F 16 L <br> F 01 N |

The present search report has been drawn up for all claims

| Place of search | Date of completion of the search | Examiner |
|---|---|---|
| THE HAGUE | 21-02-1989 | HUBEAU M.G. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

               

& : member of the same patent family, corresponding
    document

EPO FORM 1503 03.82 (P0401)